Europäisches Patentamt

European Patent Office

Office européen des brevets

(19)

(11) Publication number: **0 259 079**

**A2**

(12)

# EUROPEAN PATENT APPLICATION

(21) Application number: **87307451.2**

(51) Int. Cl.⁴: **C04B 30/00**

(22) Date of filing: **24.08.87**

(30) Priority: **02.09.86 GB 8621204**

(43) Date of publication of application:
**09.03.88 Bulletin 88/10**

(84) Designated Contracting States:
**AT BE CH DE ES FR GB IT LI NL SE**

(71) Applicant: **MICROPORE INTERNATIONAL LIMITED**
**Hadzor Hall Hadzor**
**Droitwich Worcestershire WR9 7DJ(GB)**

(72) Inventor: **Hughes, John Thomas**
**Arbour House**
**6 Cromwell Crescent Worcester WR5 2JW(GB)**

(74) Representative: **Jackson, Derek Charles**
**Anthony Cundy & Co. 384 Station Road**
**Dorridge Solihull West Midlands B93 8ES(GB)**

(54) Method of moulding shaped articles of microporous thermal insulation material.

(57) A method of moulding shaped articles of microporous thermal insulation material comprises providing a mould which is dimensioned so as to be smaller by a predetermined amount than the corresponding dimensions of the desired shaped article and charging a predetermined amount of an intimate mixture of a microporous thermal insulation material into the mould. The intimate mixture is compacted within the mould by means of a die which is urged towards the base of the mould within an area defined by side walls of the mould. Subsequently at least a part of the side walls of the mould are removed while the compacted intimate mixture remains under compression due to the urging of the die towards the base of the mould and then the die is released so as to allow the compacted intimate mixture to expand freely.

FIG. 4.

# METHOD OF MOULDING SHAPED ARTICLES OF MICROPOROUS THERMAL INSULATION MATERIAL

The present invention relates to a method of moulding shaped articles of microporous thermal insulation material.

Microporous thermal insulation materials are produced by applying pressure to an intimate mixture of finely divided silica, an infra-red opacifier and optionally a reinforcing fibre. Such materials can be formed into simple shapes by confining the intimate mixture in a mould and compacting it with a die. A profile may be provided in the mould or the die to produce the desired shape, but it is difficult accurately to control the dimensions of the shaped insulation article so produced.

Microporous thermal insulation materials are difficult to handle because of inherent resilience which is apparent when a shaped insulation article is removed from a mould in that the shape of the article is not identical with the profile of the mould. This is because the compacted microporous material expands when the applied moulding pressure is released.

Allowances can be made in the shape of the mould tools to enable the desired shaped article to be formed, but difficulties remain in removing the shaped article from the mould.

One technique which has been used is simply to force the shaped insulation article from the mould by pushing with the die. This is reasonably effective for small articles such as small discs where the mould is a simple tube and the die is a disc. In this case, the shaped insulation article can be formed by temporarily closing one end of the tube, introducing a charge of the intimate mixture, and applying pressure to the die so as to form the disc. The disc can then be removed from the tube by opening the end of the tube and pushing the disc from the tube with the die. Nevertheless, the disc can be seen to increase in diameter as it leaves the tube and small cracks may form around the edge of the disc, but the overall result is generally satisfactory.

The above-described technique can be improved by employing a tube which is constructed from two or more parts and which can be disassembled to free the shaped insulation article from the mould.

However, neither of these techniques is satisfactory if the shaped article is not small. For example, they will not work for a shaped slab measuring 1000 x 500 x 15mm. In such a case, the mould may be a simple rectangular construction comprising four upright walls connected to form an open box and the die may be a rectangular element which is slidable within the mould in the manner of an internally fitting lid. The mould is charged with the intimate mixture which is then compacted within the mould by applying pressure by way of the die so as to form a compacted slab of microporous thermal insulation material. However, when the die is removed from the mould the compacted insulation material expands, even though it is still within the mould, to form a domed shape which cracks and distorts, thus making it impossible to remove the shaped insulation article from the mould without damaging it.

One solution to this problem involves modifying the composition of the intimate mixture in order to eliminate as far as possible the characteristic expansion which occurs when the forming pressure is removed from the compacted block. This may be accomplished by incorporating additives in the intimate mixture which improve self-bonding of the constituents of the mixture, which additive may or may not be removed at a latter stage in the manufacture of the shaped insulation article. Unfortunately, we have found that this solution has the disadvantage of reducing the performance of the shaped insulation article by increasing the thermal conductivity of the microporous thermal insulation material.

It is therefore an object of the present invention to provide a method of moulding shaped articles of microporous thermal insulation material in such a way that they do not deteriorate on removal from the mould.

According to the present invention there is provided a method of moulding shaped articles of microporous thermal insulation material, which method comprises the steps of:

providing a mould which is dimensioned so as to be smaller by a predetermined amount than the corresponding dimensions of the desired shaped article, which mould comprises a base and side walls;

charging a predetermined amount of an intimate mixture of a microporous thermal insulation material into the mould;

compacting the intimate mixture within the mould by means of a die which is urged towards the base of the mould within the area defined by the side walls;

removing at least a part of the side walls of the mould while the compacted intimate mixture remains under compression due to the urging of the die towards the base of the mould; and

releasing the urging of the die towards the base of the mould so as to allow the compacted intimate mixture to expand freely;

The side walls of the mould may be removed by dismantling the walls. Automatically, the side walls may be removed by withdrawing the walls.

The mould may include a tray into which the intimate mixture is compacted, the walls of the mould extending into the tray such that when the walls are removed the compacted intimate mixture expands to abut against edges of the tray. The edges of the tray may be formed with a rim, the intimate mixture expanding to fill the gap between the rim and the base of the tray.

For a better understanding of the present invention and to show more clearly how it may be carried into effect reference will now be made, by way of example, to the accompanying drawings in which:

Figure 1 is a diagrammatic illustration, partly in section, of a mould and die arrangement for forming a simple rectangular slab;

Figure 2 illustrates diagrammatically one method of removing the mould whilst pressure is still applied to the compacted slab;

Figure 3 illustrates diagrammatically and partly in section another method of removing the mould whilst pressure is still applied to the compacted slab;

Figure 4 illustrates diagrammatically and partly in section a first step in forming a compacted slab within a supporting tray;

Figure 5 illustrates a second step in forming a compacted slab within a supporting tray;

Figure 6 illustrates a third step in forming a compacted slab within a supporting tray; and

Figure 7 illustrates an optical fourth step in forming a compacted slab within a supporting tray.

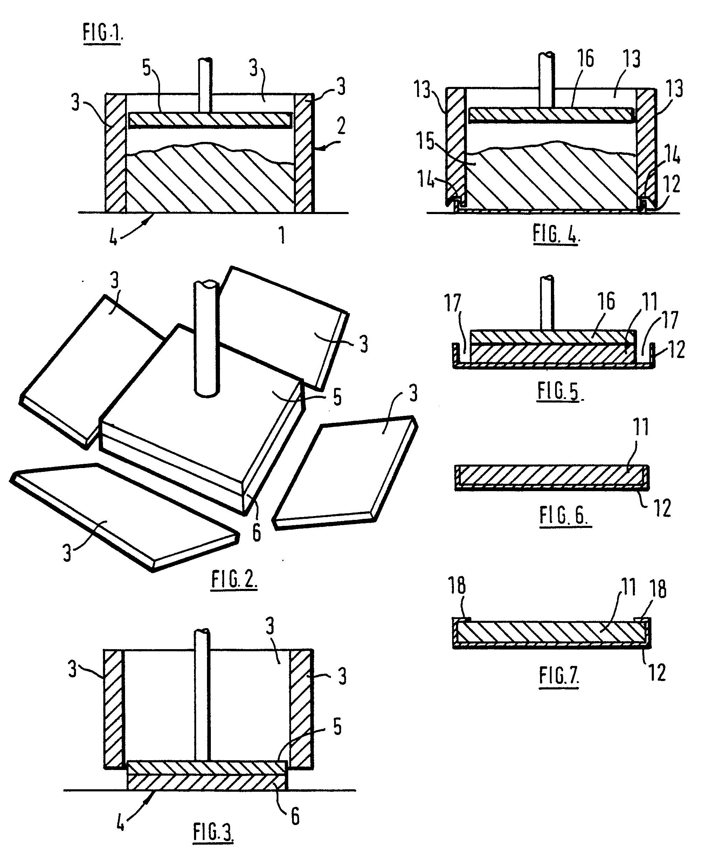

As shown in Figure 1, a simple rectangular slab can be moulded by confining a charge 1 of an intimate mixture of finely divided silica such as pyrogenic silica, an infra-red opacified and a reinforcing fibre within a box 2 which comprises four walls 3 arranged on a base 4. The charge 1 of intimate mixture is compacted by applying pressure to a die 5.

Doming of the compacted slab is avoided by the means shown in Figure 2 or Figure 3.

As can be seen from the embodiment shown in Figure 2, the mould can be disassembled by removing the walls 3 while the die 5 still applies pressure to the slab 6. After the walls 3 have been removed, the pressure on the die 5 may be released to leave a perfectly formed slab 6. Alternatively, as can be seen from Figure 3, the mould can be removed by withdrawing the side walls 3 as a single unit upwardly beyond the limits the slab 6 while the die 5 still applies pressure to the slab. Once again, pressure on the die 5 may be released once the walls 3 have been removed to leave a perfectly formed slab 6.

Figures 4, 5 and 6 illustrate how a slab 11 may be supported in a metal tray 12. As can be seen from Figure 4, the metal tray forms the base of the mould with the walls 13 configured to fit closely against the side walls of the tray 12. The walls 13 are arranged such that the dimensions of the slab 11 are initially a predetermined amount smaller than the dimensions of the tray. The lower faces of the walls 13 are provided with recesses 14 so that the walls extend downwardly substantially to the surface of the tray 12. A charge 15 of intimate mixture as described about is confined within the mould and is compacted by applying pressure to a die 16. Figure 5 shows that when the intimate mixture has been compacted to form slab 11 the walls 13 are removed while the die 16 still applies pressure to the slab 11. The removal of the walls may be by either of the methods described above with reference to Figures 2 and 3. The removal of the walls 13 results in a gap 17 being formed temporarily between the edges of the slab 11 and the side walls of the tray 12. However, the compacted insulation material quickly expands to abut against the side walls of the tray. The die 16 may then be removed to leave slab 11 firmly held in tray 12 as can be seen in Figure 6.

It will be noted that the orientation of the components shown in Figures 4 and 5 may be obtained, for example inverted, if this is found to be desirable.

In order to improve further the security of the slab 11 within the tray 12, the walls of the tray may be shaped as can be seen in Figure 7 so that the slab is supported by a rim 18. This can be achieved because of the expansion of the compacted insulation material subsequent to the removal of the walls of the mould. The provision of the rim 18 can assist in certain circumstances in improving the handleability of the product.

It will be understood that although the present invention has been described with reference to the production of a shaped article in the form of a simple rectangular slab, the shape of the article is not restricted to such a slab and many other shapes can be produced. Further, although the method according to the present invention is most useful where the shaped article has relatively large dimensions, it can also be employed where the shaped article has relatively small dimensions.

## Claims

1. A method of moulding shaped articles of microporous thermal insulation material characterised by the steps of:
providing a mould which is dimensioned so as to be smaller by a predetermined amount than the corresponding dimensions of the desired shaped article, which mould comprises a base and side walls;

charging a predetermined amount of an intimate mixture of a microporous thermal insulation material into the mould;

compacting the intimate mixture within the mould by means of a die which is used towards the base of the mould within the area defined by the side walls;

removing at least a part of the side walls of the mould while the compacted intimate mixture remains under compression due to the urging of the die towards the base of the mould; and

releasing the urging of the die towards the base of the mould so as to allow the compacted intimate mixture to expand freely.

2. A method according to claim 1, characterised in that the side walls of the mould are removed by dismantling the walls.

3. A method according to claim 1, characterised in that the side walls of the mould are removed by withdrawing the walls.

4. A method according to claim 1 or 2, characterised in that the mould includes a tray into which the intimate mixture is compacted, the walls of the mould extending into the tray such that when the walls are removed the compacted intimate mixture expands to abut against edges of the tray

5. A method according to claim 4, characterised in that the edges of the tray are formed with a rim, the intimate mixture expanding to fill the gap between the rim and the base of the tray.

FIG.1.

FIG.2.

FIG.3.

FIG. 4.

FIG.5.

FIG. 6.

FIG.7.